# EUROPÄISCHE PATENTANMELDUNG

(11) **EP 2 689 683 A1**
(43) Veröffentlichungstag der Anmeldung: **29.01.2014**
(21) Anmeldenummer: 12005355.8
(22) Anmeldetag: 23.07.2012
(51) Int. Cl.: A45B 9/00, A63C 11/22, F16B 7/14

(54) **Exzentersystem mit automatischer Festhaltung**

(71) Anmelder: Frank, Egon, 97531 Theres (DE); Schmied, Josef, 4802 Ebensee (AT)
(72) Erfinder: Frank, Egon, 97531 Theres (DE); Schmied, Josef, 4802 Ebensee (AT)

(57) **Zusammenfassung**

Es handelt sich bei dieser Patentanmeldung um ein Exzentersystem, das aufgrund unterschiedlicher Reibeigenschaften in der Exzentereinheit eine selbstständige Festhaltung bei der Drehbewegung auslöst und damit über die Exzentergeometrie die Klemmung erfolgt.

in den Ausführungen, Allgemeiner Stand der Technik, Funktionsbeschreibung sowie in den Patentansprüchen ist diese neue Erfindung genau beschrieben. In der Zeichnung Fig 1 ist der technische Aufbau genau beschrieben. Die Zeichnung Fig. 1 dient der Veröffentlichung.

## Beschreibung

### Allgemeiner Stand der Technik;

Gemäß dem Stand der Technik sind Exzenterverschlüsse/Exzenteranwendungen/Exzenterriegel und die daraus vorhandenen technischen Anwendungen Stand der Technik seit vielen Jahrzehnten.

Auch das Patent AT 413183B, ist eine stufenlos verstellbare Teleskopanwendung mittels Exzenterklemmung.

Exzenterbolzen bzw. Exzenterringe oder geschlitzte Exzenterringe gehören ebenso dem Stand der Technik an. Ebenso gibt es, wie oben aufgezählt, technische Anwendungen bei denen ein Exzentersystem auf Grund einer Drehbewegung eine Kraft auf mindestens ein benachbartes Bauteil ausübt. Dabei ist die Art der Bewegungsabläufe egal, um die Exzenterdrehbewegung zu erreichen, damit mittels Exzenterelement eine wirksame Klemmung erfolgt.

Ebenso ist es bekannt, dass man Hartwerkstoffe oder Weichwerkstoffe für das Exzenterbauteil verwendet, je nach Art der Kraftverhältnisse die für das entsprechende Einsatzvorhaben bzw. deren Einsatzbedingungen benötigt werden.

### Funktionsbeschreibung:

Auf diesem Stand der Technik basierend, gibt es unsere neue Erfindung der Exzenteranwendung, die darauf ausgerichtet ist, dass über ein exzentrisch angeordnetes Reibverbindungssystem mit unterschiedlichen Reibeigenschaften im freien Exzenterelement (1), das Exzenterelement (1) ist in seiner Drehbewegung lose im Lagerbauteil (8) eingebaut und deshalb wird eine zusätzliche Arretierung bzw. zusätzliche Positionshaltung nicht mehr benötigt. Durch das Reibverbindungssystem mit den unterschiedlichen Reibeigenschaften an der Außenseite des Exzenterelement (1) und an der Lagerung (2) wird eine eigenständige (selbständige) Positionshaltung erreicht.

Wir bezeichnen das auch als " automatische Festhaltung". Diese selbstständige Positionshaltung (auch "als automatische Festhaltung" bezeichnet) ist eine Kombinationseigenschaft, mittels unterschiedlichem Reibverhalten (Haft-, Reib-, oder Kontaktverbindung) in den Lagerstellen vom Exzentersystem.

Dieses Positionssystem ist notwendig, damit die kraftschlüssige Exzenterklemmung mittels elastischer Verformung vom Exzenterelement (1) durch die Exzenterbewegung im Lagerbauteil (8) an der Lagerstelle (3) erreicht wird.

Dieser neu entwickelte Funktionsmechanfsmus einer Exzenterklemmung wird durch einen einleitenden Formschluss ausgelöst, dessen Formveränderung am Exzenterelement (1) mittels der oben beschriebenen Festhaltung (Haft-, Reib-, oder Kontaktschluss) erzeugt wird. Eine zusätzliche oder externe Betätigung, bzw. zusätzliche oder externe Arretierung, bzw. zusätzliche oder externe Festhaltung, wie sie aus bestehenden Exzentersystemen bekannt ist, wird mit dieser Erfindung nicht mehr benötigt. Das unterschiedliche Reibsystem führt zur automatischen Festhaltung des Exzenterelement (1).

Die eigentliche kraftschlüssige Exzenterklemmung erfolgt über einen Exzenterring bzw. ein Exzenterelement (1) durch elastische Verformung des selbigen Elementes (Exzenterbauteil (1)), weil der Exzenterring aus einem elastischen Weichwerkstoff oder elastischem Hartwerkstoff besteht. Im Exzentermechanismus wird bei Krafteinleitung, durch die Drehbewegung des Lagerbauteiles (8), über die vorhandene Reibung zwischen dem Außendurchmesser oder der Außenkontur des Exzenterelementes (1) und dem Innendurchmesser des Außenrohres (5) oder der Innenkontur des Außenrohres (5) über die Lagerung (2) des Exzenterelementes (1) an der Lagerstelle (3) die Kontur am Exzenterelement (1) verformt, da die vorhandene Reibung an der Lagerung (2) des Exzenterelementes (1) geringer gehalten wird als die vorhandene Reibung am Außendurchmesser des Exzenterelementes (1). Über diese gesteuerte Wechselwirkung dieser Reibkombination(en) erreicht man die automatische Festhaltung des Exzenterelementes (1), es entfällt damit die sonst zusätzlich benötigte Positionshaltung des Exzenterelementes (1) und mittels Formänderung des Exzenterelementes (1) erfolgt die gewollte sehr starke Klemmung zwischen dem Lagerbauteil (8) und dem Außenrohr (5). Das Lagerbauteil (8) ist mit dem Innenrohr (4) festverbunden.

Diese Art der Kraftklemmung kann auch umgekehrt erfolgen, so dass Außenrohr (5) praktisch Innenrohr (4) wird und innenrohr (4)zu Außenrohr (5)wird, das Lagerbauteil (8) die Funktion vom Exzenterelement (1) übernimmt und das Exzenterelement (1) die Funktion Lagerbauteil (8) übernimmt. Man wechselt (vertauscht) einfach den Verbindungsschluss im Exzenterelement (1).

Die unterschiedliche Reibkombinationen können z. B. durch ein Lager (auch Wälzlager, oder Gleitlager) an der Lagerstelle (3) mit geringer Haft-, Wälz- oder Gleitreibung und mindestens einer größeren anderen Reib- oder Haftfläche an der Außenkontur des Exzenterelementes (1), das mit der Innenkontur des Außenrohr (5) ein Reibsystem bildet, hergestellt werden. Bei noch stärkerer Kraftklemmung kann dieses Exzentersystem mehrfach eingebaut werden, auch eine Reihenbildung dieses Exzentersystems mit automatischer Feststellung ist denkbar.

Diese Klemmung kann jederzeit stufenlos erfolgen, durch eine kurze und leichte Drehbewegung des Lagerbauteiles (8) ist diese Klemmung jederzeit feststellbar und lösbar. Diese Klemmung besitzt ein eigenes Selbsthaltungssystem, ausgelöst durch das Exzenterelement (1)und muss nicht extra in der Klemmposition gesichert werden. Selbst äußere Einflüsse wie: Erschütterungen, Schmutz, Feuchte und Wasser im Exzentersystem beeinträchtigen diese Funktionsklemmung nicht.

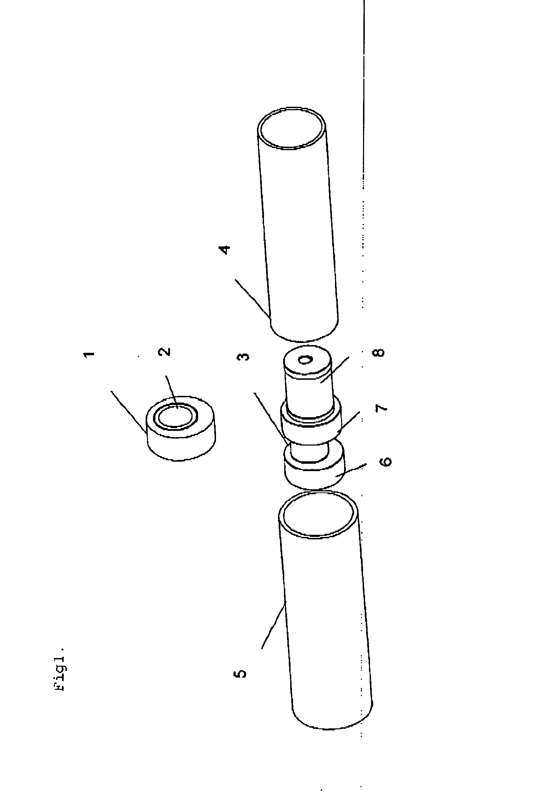

## Patentansprüche

1. Exzentersystem **dadurch gekennzeichnet, dass** die Kraftklemmung durch elastische Verformung des Exzenterelements (1) erfolgt, eingeleitet durch eine Drehbewegung des Lagerbautelles (8), die mittels Kraftübersetzung (Bohrabstand der exzentrisch angeordneten Lagerung (2) und Lagerstelle (3)) des Exzenterelement (1) verformt bzw. durch Lösung dieser Krafterzeugung entlastet.

2. Exzentersystem **dadurch gekennzeichnet, dass** das Exzenterelement (1) nur in der elastischen Materialverformung belastet bzw. gelöst wird und somit der Exzenterwerkstoff keiner Beschädigung ausgesetzt wird.

3. Exzentersystem **dadurch gekennzeichnet, dass** die erzeugte Kraftklemmung im Exzenterelement (1) selbsthemmend ist, sie kann nur durch Öffnen der Kraftklemmung mittels Drehbewegung des Lagerbauteil (8) kraftlos gestellt werden.

4. Exzentersystem **dadurch gekennzeichnet, dass** Im Bedarfsfall das Exzentersystem mit automatischer Feststellung auch mehrfach als Kraftklemmung in Teleskopsystemen eingesetzt werden kann.

5. Exzentersystem **dadurch gekennzeichnet, dass** auf Grund zweier unterschiedlicher Reibverbindungssysteme im Exzenterelement (1), das Exzenterelement (1) ohne eine Arretierung oder einem Hebelhaltesystem bzw. ohne einen vorgegebenen Formschluss auskommt. Entweder ist die Reibverbindung an der Lagerstelle (3) mittels Lagerung (2) geringer als zwischen der Außenkontur des Exzenterelementes (8) und der Innenseite des Außenrohres (5), oder man vertauscht das Reibverbindungssystem an den genannten Lagerstellen. Der Reibunterschied in den Reibverbindungssystemen erzeugt eine eigenständige automatische Positionshaltung des Exzenterelementes (1). Damit ist eine sichere und stabile Positionshaltung des Exzenterelement (1) erreicht, auch wenn das Exzentersystem bewegt wird (meist eine Längsbewegung), wie es in einem stufenlosen, positionslosen Teleskopsystem von mindestens 2 unterschiedlichen Rohren oder Formprofilen der Fall ist.

6. Exzenterelement (1) **dadurch gekennzeichnet, dass** das Exzenterelement (1) aus einem elastischen Werkstoff besteht, zumindest muss ein elastischer Werkstoffanteil vorhanden sein, damit eine hinreichende Kraftklemmung durch elastische Verformung des Exzenterelementes (1) erreicht wird.

7. Exzentersystem **dadurch gekennzeichnet, dass** das Exzenterelement (1) zu Wartungszwecken auch geschlitzt bzw. geöffnet sein kann.

8. Exzentersystem **dadurch gekennzeichnet, dass das** Exzenterelement (1) im Lagerbauteil (8) so montiert ist, dass das Exzenterelement (1) zwischen dem Führungsteil 1. (6) und dem Führungsteil 2. (7) integriert ist, damit die kraft- und formschlüssige Klemmung vom Exzenterelement (1) durch die Drehbewegung des Lagerbauteil (8)
zielgerichtet eine Kraftklemmung mit der Innenfläche vom Außenrohr (5) und dem Lagerbauteil (8) erzeugt. Die Hauptverformung vom Exzenterelement (1) entsteht zum Außenrohr (5) hin, damit eine bestmögliche Klemmhaltung entsteht.

9. Exzentersystem **dadurch gekennzeichnet, dass** durch minimale Drehbewegungen und ohne größeren Kraftaufwand durchgeführende Drehbewegungen des Lagerbauteiles (8) eine schnelle und zuverlässige Klemmung oder ein schnelles Lösen der Kraftverformung des Exzenterelementes (1) möglich ist.

10. Exzentersystem **dadurch gekennzeichnet, dass** durch die Drehbewegung des Lagerbauteiles (8) das Exzenterelement (1) verformt wird und der Zwischenraum zwischen Führungsteil (6) und Führungsteil (7) je nach Drehrichtung kleiner oder größer wird.

11. Exzentersystem **dadurch gekennzeichnet, dass** durch die Drehbewegung des Lagerbauteiles (8) das Exzenterelement (1) verformt wird und damit das Außenrohr (5) und das Innenrohr (4) fest miteinander verbunden werden und nicht mehr lose ineinander gleiten können.

12. Exzentersystem **dadurch gekennzeichnet, dass** die Lagerstelle (3) außermittig vom Lagerbauteil (8) und die Lagerung (2) ebenso außermittig vom Exzenterelement (1) angeordnet sind.
